# EUROPEAN PATENT APPLICATION

(11) **EP 1 380 215 A2**
(43) Date of publication of application: **14.01.2004**
(21) Application number: 03013225.2
(22) Date of filing: 12.06.2003
(51) Int. Cl.: A23K 1/00, A23K 1/16, A23K 1/165, A23N 17/00, B01F 13/02

(54) **process for the preparation of bulk goods containing at least two active compounds**

(30) Priority: 13.07.2002 DE 10231710
(71) Applicant: Degussa AG, 40474 Düsseldorf (DE)
(72) Inventor: Polzer, Wolfgang, 63584 Gründau (DE); Schneider, Engelbert, 63755 Alzenau (DE); Kniesel, Heidemarie, Dr., 63768 Hösbach (DE); Pack, Michael, Dr., 63755 Alzenau (DE); Perez, Jose, Dr., 63505 Langenselbold (DE); Greissinger, Dieter, Dr., 61194 Niddatal (DE)

(57) **Abstract**

The invention relates to a process for the preparation of bulk goods, these being above all mixed feeds, containing at least two solid active compounds by a procedure in which a mixture of the active compounds is first homogenized with compressed air fed in via a nozzle ring and this mixture is then added to the mixed feed.

## Description

The invention relates to a process for the preparation of bulk goods, these being above all mixed feeds, containing at least two solid active compounds by a procedure in which a mixture of the active compounds is first homogenized with compressed air fed in via a nozzle ring and this mixture is then added to the mixed feed.

An optimum supply of active compounds, in particular vitamins, plays an important role in healthy and environment-friendly nutrition of stock animals. In addition to factors related to need, economic and application requirements are also to be taken into account when these are used in mixed feeds for agricultural stock animals.

Thus, for example, the combining of several nutrients and active compounds in a precisely defined metered amount with an adequate homogeneity of the mixed substances with a low expenditure on time and energy is a central objective in the preparation of mixed feeds for animal nutrition. So that the active compounds are available regularly and uniformly when supplied to the animals, the distribution of the active compounds, in particular the microcomponents, such as vitamins or enzymes, employed in very small amounts, for example in the range of 10 to 100 ppm, in the total mixture plays an important role. It is equally important for the amount of active compound necessary for maintaining health and specified in the design of the ration to be obtained and maintained at any point in time.

It is therefore known that small components, such as e.g. vitamins, trace elements or pigments, are conventionally metered into the main mixture in the form of premixes with one another and/or with carrier substances. This dilution step allows better metering and distribution in the end feed. In the USA, for example, individual additives are also diluted with a carrier substance and added to a the mixed feed, in addition to a standard premix, for adaptation to specific requirements. In Germany, for example, according to legal provisions additives which are subject to maximum amount limits, such as vitamin A or vitamin D, must be employed as a premix with at least 0.2% of the main mixture. Premixes are conventionally prepared, stored, distributed and employed in the mixed feed plant in a standardized composition. While individual isolated additives in themselves are relatively stable in respect of their properties and their content of active compound, premixes, and in particular premixes of active compounds with, for example, mineral and trace elements, are far more unstable. During their storage and processing, moisture, heat, pressure and oxygen have an effect, so that redox reactions and/or acid/base reactions can occur to a certain extent, which may reduce the desired and expected content of active compound (D. Dressler, Mühle + Mischfuttertechnik (1993) 27/28, 327-335). In order therefore to avoid under-dosing in the finished mixed feed, which reduces the expected effect of the active compound, the manufacturer of mixed feeds is forced to over-dose on the basis of values from experience, which can compensate the loss of active compound but in the adverse case is not economical or in a few cases is even harmful.

There are a number of technical solutions for rational mixing of different components to give sufficiently homogeneous mixtures. Premix systems conventionally comprise a reservoir and metering device and a separate high-performance mixer, and are often produced at a separate location and time from the main mixture, so that storage and transportation times arise and the user relies on particular commercially obtainable compositions.

At the same time it is known that in addition to the widely used mechanical mixers, air jet mixers of varying design with pneumatic mixing devices exist as independent units for mixing bulk goods. The possibility of metering and delivering individual components in an installation intended for this purpose is also known. Such direct metering reduces the risk of demixing of the premix during handling and reduces active compound losses due, for example, to deposits in delivery equipment or due to suction into suction installations for dust reduction. In all cases, the additional mixing task required additional units or capacity in existing mixers, associated with higher investment and more energy and a greater outlay on maintenance and greater space requirement. Subsequent conversion or upgrading of an existing production installation is therefore made considerably more difficult. DE 4128247 A1 describes the prior art for solutions with a high efficiency and low energy input in the form of mixing silos which combine storage and homogenization. The disadvantages of these proposals, however, are the low mixing accuracy and/or complicated silo installations or silo discharge devices. The exact metering and feeding of components of a very small amount and homogeneous distribution thereof in one or more main components have also proved to be problematic. DE 4128247 attempts to solve these problems by reducing the mixing operation in a static mixer to two mixture components. The disadvantage remains here that a premix, preferably with contents of the base components, must be produced from small components in a known and conventional manner in a positive mixer.

The products produced in this way must also be stored, handled and possibly transported, which in the case of rather unstable active compounds leads to losses in active compound over time, this loss still having to be compensated by higher additions in order to achieve the precisely defined amount of ingredients. The flexibility of the user in respect of the amount of active compound he wants to use is also limited by predetermined recipes.

The invention is based on the object of avoiding the use of premixes in order, in the case of unstable active compounds, to reduce the action time of substances which are rather incompatible with one another in a premix, to reduce the dilution effects by further carrier substances and to increase the flexibility of the user in designing his recipe.

The invention provides a process for the preparation of bulk goods containing solid active compounds, in which
a) at least two active compounds A and B, of which A serves as a carrier of the active compound B, where B can consist of several components, are initially introduced into a container,
b) compressed air is blown in a cycle sequence into this mixing container through a nozzle ring attached at the discharge connector of the container in the form of a intermediate flange,
c) a homogeneous mixture of the active compounds is prepared and is then discharged from the container and
d) in particular without further delay is mixed with the bulk goods and the bulk goods, which are preferably mixed feeds, containing the active compounds are prepared in this manner.

By incorporation of a nozzle ring in the form of an intermediate flange at the discharge connector of an existing container or silo, this acquires the functionality of a gas jet mixer. Existing flows of material and plant components make preparation in separate plant components and/or third party acquisition of premixes with at least equal accuracy superfluous. Incorporation into the collecting tank of an existing metering unit is particularly advantageous.

The components A which are conventionally to be metered are, for example, amino acids, such as methionine, lysine, threonine or other active compounds employed in the formulation of mixed feeds, which are introduced into the feedstuffs mixture in the concentration range of in each case 0.05 to 5 wt.%. Components B are active compounds, such as vitamins, for example vitamin A, vitamin D, vitamin E, nicotinamide or other vitamins or provitamins, enzymes, such as xylanases, gluconases or phytases, or other conventional active compounds in animal nutrition, the content of which in the feed mixture is in each case between 5 ppm and 2,000 ppm.

Active compounds B present in liquid form are converted into the solid form in a suitable manner, e.g. by mixing with inorganic auxiliary substances, such as e.g. precipitated or pyrogenic silicas.

The ratio of active compounds A and B is adjusted as determined by the organization for formulation of the mixed feed. The weight ratio here can be between 2,000 : 1 and 5 : 1 (A : B), but preferably between 500 : 1 and 10 : 1, so that A serves as the carrier substance and B as the microcomponent. The active compound B can of course also consist of several components of a different nature. They are then independently of one another in the range of the abovementioned weight ratios to A. The absolute amounts of the active compounds also depend on the given feed formulation and are in general between 1 and 100 kg per batch for component A, preferably between 3 and 60 kg. The problems described in the prior art are eliminated by this procedure.

The so-called nozzle ring is a very simple inexpensive component with which various existing containers or silos can be converted. The space requirement is decidedly low, so that no conversion difficulties arise in the conventionally constricted mixed feed installations and investment costs are low. The low energy requirement during operation also contributes towards the high profitability and offers the operator of the mixed feed plant an economically advantageous supplementing with microcomponents. The high metering accuracy of the originally purely metering installation is retained on conversion to metering/mixing operation and accurately ensures introduction of the required amount of active compound into the main mixture. At the same time, on achieving a sufficiently good homogeneity of the mixture of active compounds (components) A and B, the mixing times are reduced to the extent that the run times previously employed in the mixed feedstuff plant are not lengthened and the total capacity of the mixed feed installation does not suffer. The procedure proposed is of course suitable not only for simultaneous preparation of mixtures of components A and B, but also, for example, de-dusting, fluidizing, cooling or rendering inert or gassing any substances in the collecting tank employing fluidization agents other than air. The essential advantage, however, is that the operator of the mixed feed plant no longer has to rely on obtaining premixes, with the associated problems of loss of active compound, over-dosing and restriction to premix compositions, for the additives employed according to the invention. With the procedure proposed, the isolated active compounds, which are known to be more stable, can be employed, so that no losses of active compound due to transportation, storage and interactions with other constituents of the premix occur. The flexibility in designing recipes is considerably greater due to the self-determined and -influenceable content of active compound and increases the competitiveness of the mixed feed producer.

The new device is used for just-in-time preparation, delivery and metering, in particular of mixture of granular or crystalline pulverulent active compounds before introduction into the so-called main mixer of the mixed feed installation. The mixture is preferably prepared batchwise discontinuously in a collecting tank converted into a mixing tank by the nozzle ring.

For this, the desired amount, according to the batch size, of an active compound A as the carrier substance and one or more components B is introduced into the mixing tank.

An active compound A which is metered in a higher amount than the microcomponent(s) by at least one power of ten is favourable here as the carrier substance, in order to achieve the required mixing accuracy by the premix in the finished product. Before the active compounds A and B enter into the mixing tank, they are in general metered via metering organs in the appropriate number into the weighing containers. The weighing containers are fixed to precision balances appropriate for the working area; they are constructed such that they can be emptied without residue by a pneumatic suction delivery after the metering.

If two active compounds are employed, emptying preferably takes place in three steps:

A portion of the active compound A is sucked off and enters into the mixing tank, which comprises a cyclone collector with a collecting pot and incorporated filter. The collecting pot is conical in construction and has a volume of approx. 35 l, and the discharge diameter of 200 mm is closed with a flap.

The smaller amount of active compound B is then sucked off and deposited in the mixing tank. The remainder of active compound A is then sucked off and deposited in the mixing tank.

This procedure, described here by way of example, ensures that the pipeline is flushed with active compound A and finally with air, and the entire amount of the active compound B enters into the mixing tank.

A nozzle ring with preferably 12 radial bores (diam. 3 mm) is now arranged directly above the discharge flap in the discharge of the mixing tank. On the outer diameter of the ring the bores are connected, for example, in 4 groups of 3 each to the compressed air distribution via 4 solenoid valves. However, the number of bores is variable and depends on the task. On the inner diameter the bores are angled downwards at an angle of 10 to 80 degrees, in particular 30 to 60 degrees.

Compressed air can thus be passed through these bores with an increased pressure of > 0 to 15, in particular 2 to 10, preferably 3 to 8 bar, to the inner diameter of the ring under the product on the discharge flap of the collecting tank; it is diverted there and passes out through the product bed in the mixing tank and the filter surface arranged above. The four solenoid valves and the 4 groups of bores connected are driven in alternating cycles such that an air turbulence is established in the mixing tank. The amount of air is adjusted according to the amount and structure of the product such that the total amount of product is fluidized; with the turbulence of the air stream imposed in the mixing tank, this results in intensive thorough mixing of the carrier substance and microcomponents.

A variation coefficient, which characterizes the mixing quality, of 1 to 12%, in particular 1 to 10%, particularly preferably 1 to 7% is in general achieved (definition: the variation coefficient VC is the standard deviation of values obtained from a series of samples divided by their mean, see also Küster/Thiel, Rechentafeln für chemische Analytik, p. 236; de Gruyter 1982.).

The mixing time is preferably 10 to 120 sec, in particular 15 to 18 sec, especially 15 to 60 sec.

The following examples illustrate the invention.

### Example 1 (prior art)

10 kg DL-methionine are weighed together with 500 g vitamin E50 directly into a commercially available air mixer. The mixer is equipped with 6 mixing nozzles with up to 5 bores per nozzle. The mixing time varies, depending on the experiment set-up, from 40 - 300 s. The contents of the air mixer are introduced directly into a pipe (⌀ 150 mm) after the mixing operation. This pipe ("sample collector") is composed of eight individual segments which can be separated; each segment is treated as an analytical sample in which the vitamin E content is determined. Comparison of the individual analytical samples with one another resulted in a variation coefficient of 30 - 60%. This experiment documents the performance of the prior art in gas jet mixers. Vitamin E50 is a commercial product comprising 50 wt.% vitamin E and 50 wt.% silica.

### Example 2 (prior art)

10 kg DL-methionine are weighed together with 500 g vitamin E50 directly into the reservoir tank of a metering unit. The contents of the reservoir tank are collected in a collector by suction delivery (flying delivery) over a delivery zone of 7.5 m.

The contents of the collector are introduced directly into the sample collector without further treatment. Comparison of the individual analytical samples with one another as in example 1 resulted in a variation coefficient of more than 40%. If delivery takes place over a zone of 32 m instead of 7.5 m in the assumption that premixing takes place solely due to the delivery, a variation coefficient of more than 25% results.

### Example 3

10 kg DL-methionine are introduced together with 500 g vitamin E50 directly into the collector of a suction delivery unit. The collector is equipped with a nozzle ring (⌀ DN 200, straight bores, 12 bores of 3 mm) incorporated between the emptying flap and the discharge of the collector. In a cycle sequence, compressed air is blown through the nozzle ring into the bulk goods, and these are thereby mixed for 60 sec. The contents of the collector are introduced directly into the sample collector after the mixing operation. Comparison of the individual analytical samples with one another results in a variation coefficient of 6 - 12 % over several repetitions.

### Example 4

A nozzle ring in which the bores are directed downwards at an angle of 45° is employed in a construction as in example 4, which improves the variation coefficients to 2 - 3% because of the better mixing in the original dead space.

### Example 5

In a construction as in example 5, the 12 nozzles are not charged simultaneously with air, but are driven in cycles in four groups of three bores each.

### Example 6

10 kg DL-methionine are weighed into the reservoir tank of a metering unit.

The contents of the reservoir tank are delivered into a collector by suction delivery (flying delivery) over a delivery zone of 7.5 m. During the delivery operation 500 g vitamin E50 are admixed continuously to the delivery stream via a bypass.

The collector is equipped with a nozzle ring and a control as in example 6.

The contents of the collector are introduced directly into the sample collector after the mixing operation. Comparison of the individual analytical samples with one another gives variation coefficients of 1 - 3%

### Example 7

In an experiment set-up as in example 7, the mixing time is reduced from 60 s via 40 s to 20 s, it being found, surprisingly, that a mixing time of only 20 s also provides sufficiently good variation coefficients.

**Table 1**

| | | | |
|---|---|---|---|
| Example 4 | Collector with nozzle ring, straight bores | Mixing time 60 s 12 nozzles driven simultaneously | VC 6 - 12 % |
| Example 5 | Collector with nozzle ring, bores angled downwards 45° | Mixing time 60 s 12 nozzles driven simultaneously | VC 2 -8 % |
| Example 6 | Collector with nozzle ring, bores angled downwards 45° | Mixing time 60 s nozzles divided into 4 groups, driven in succession | VC 2 -3 % |
| Example 7 | Collector with nozzle ring, bores angled downwards 45°, filling via a 7.5 m delivery zone | Mixing time 60 s nozzles divided into 4 groups, driven in succession | VC 1 - 3 % |
| Example 8 | Collector with nozzle ring, bores angled downwards 45°, filling via a 7.5 m delivery zone | Mixing time 20 s/40 s nozzles divided into 4 groups, driven in succession | VC 4 - 8 % 2 - 6 % |

### Example 8

The nozzle ring and an automated progress control are integrated into an existing installation for metering additives. Methionine is metered in with the main metering device, and the vitamin E50 is metered in with an additionally installed micrometering device. After the weighing operation the two components are introduced into the collector (mixer) by flying delivery over a delivery zone of approx. 20 m. The collector is equipped with a nozzle ring (45° bores). In a cycle sequence, compressed air is blown through the nozzle ring into the bulk goods, and these are thereby mixed. The nozzles are driven successively in 4 groups of 3 holes each. The contents of the collector are introduced directly into the sample collector after the mixing operation. The variation coefficient is calculated by comparison of the individual analytical samples with one another.

**Tabelle 2**

| | | |
|---|---|---|
| 10 kg DL-Methionine + 500 g vitamin E50 | Mixing time 20 s | VC 9 -11 % |
| 10 kg DL-Methionine + 500 g vitamin E50 | Mixing time 30 s | VC 5 -6 % |
| 3 kg DL-Methionine + 150 g vitamin E50 | Mixing time 30 s | VC 4 -6 % |
| 3 kg DL-Methionine + 250 g nicotinamide | Mixing time 30 s | VC 7 % |

### Brief description of the figures

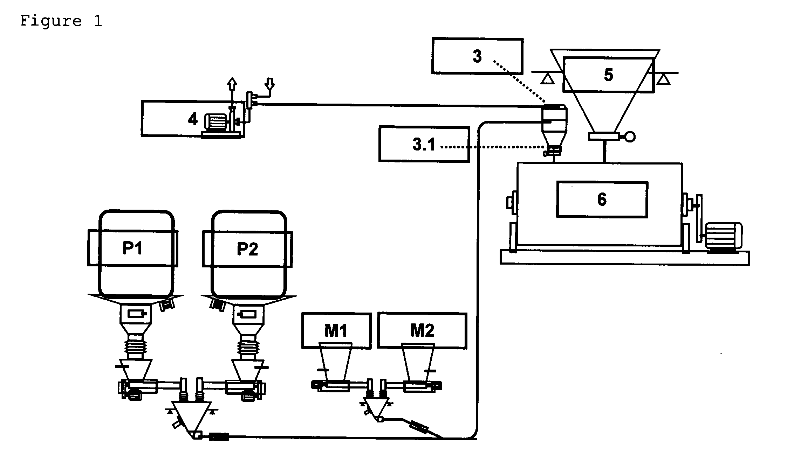

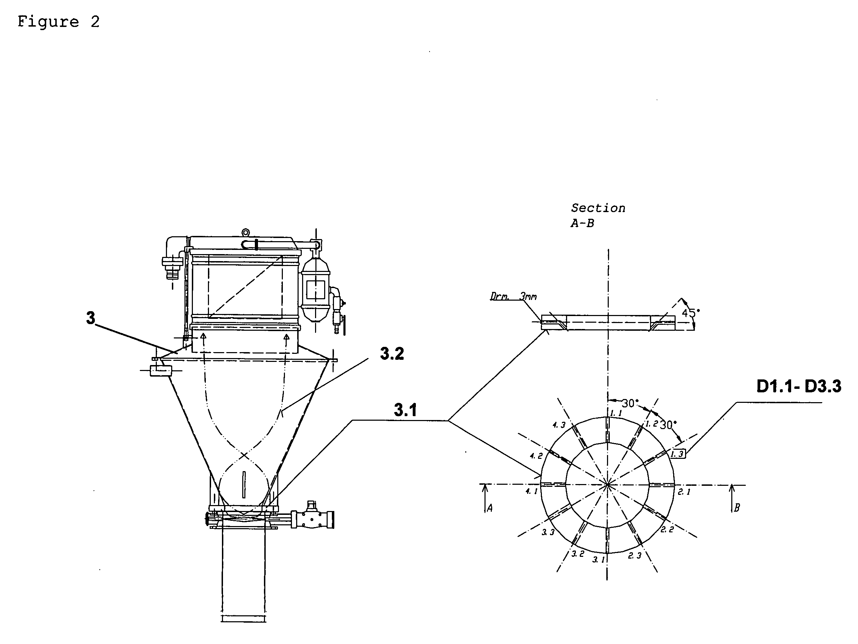

The structure of an installation and the construction of a nozzle ring are shown by way of example in figures 1 and 2. The symbols mean specifically:

| **Pos** | **Description** |
|---|---|
| P1 | Component 1 |
| P2 | Component 2 (optional) |
| M1 | Microcomponent 1 |
| M2 | Microcomponent 2 (optional) |
| D1.1 - D3.3 | Nozzle groups D1 to D4 each with 3 nozzles |
| 3 | Filter cyclone collector |
| 3.1 | Nozzle ring |
| 3.2 | Mixing air with imposed turbulence |
| 4 | Suction fan |
| 5 | Main component balance |
| 6 | Batch mixer |

## Claims

1. Process for the preparation of bulk goods containing solid active compounds, **characterized in that**
a) at least two active compounds A and B, of which A serves as the carrier of active compound B, which optionally comprises several components, are initially introduced into a container,
b) compressed air is blown in a cycle sequence into this mixing container through a nozzle ring attached at the discharge connector of the container in the form of an intermediate flange,
c) a homogeneous mixture of the active compounds is prepared and is then discharged from this container and
d) is mixed with the bulk goods.

2. Process according to claim 1, **characterized in that** the active compounds A and B are employed in a weight ratio of 2,000:1 to 5:1.

3. Process according to claim 2, **characterized in that** the active compounds A and B are employed in a weight ratio of 500:1 to 10:1.

4. Process according to claim 1, **characterized in that** the collecting tank of a metering unit is employed as the mixing container.

5. Process according to claim 1, **characterized in that** granulated or pulverulent amino acids are employed as the carrier.

6. Process according to claim 1, **characterized in that** methionine, L-lysine or L-threonine are employed, individually or together, as the carrier.

7. Process according to claim 1, **characterized in that** one or more vitamins or provitamins are employed as active compound B.

8. Process according to claim 7, **characterized in that** compounds chosen from the group consisting of vitamin A, vitamin D, vitamin E, nicotinamide or optionally esters thereof are employed as active compound B, the active compounds being present on a solid carrier material.

9. Process according to claim 1, **characterized in that** one or more enzymes are employed as active compound B, the active compounds optionally being present on a solid carrier material.

10. Process according to claim 8, **characterized in that** xylases, gluconases or phytases are employed.

11. Process according to claim 1, **characterized in that** a mixed feed serves as the bulk goods and the active compound(s) A are mixed into the mixed feed in an amount of in each case 0.5 to 5 wt.% and the active compound(s) B employed are mixed into the mixed feed in an amount of in each case 5 ppm to 2,000 ppm.

12. Nozzle rings with radial bores which are arranged in groups and are angled at the inner diameter of the nozzle ring at an angle of 10 to 80 degrees, in particular 30 to 60 degrees.

13. Use of a nozzle ring according to claim 11 for the homogenization of mixtures comprising at least the active compounds A and B, **characterized in that** the nozzle ring is incorporated before an existing discharge flap in the discharge of a container which contains at least the active compounds A and B, the bores which end at the inner diameter of the nozzle ring pointing downwards, and compressed air is passed through the bores.

14. Mixtures of at least two active compounds A and B which have a variation coefficient of 1 to 12%.
